# EUROPEAN PATENT APPLICATION

(11) **EP 4 475 491 A1**
(43) Date of publication of application: **11.12.2024**
(21) Application number: 22940375.3
(22) Date of filing: 15.09.2022
(51) Int. Cl.: H04L 12/40, H04L 41/122, H04L 45/00, H04L 69/08, H04L 67/51

(54) **SDN-BASED IN-VEHICLE NETWORK AND CONTROL METHOD THEREOF**

(30) Priority: 28.04.2022 KR 20220052481
(71) Applicant: LG Electronics Inc., Yeongdeungpo-gu Seoul 07336 (KR)
(72) Inventor: LEE, Sanghun, Seoul 06772 (KR); HONG, Hyuntaek, Seoul 06772 (KR)
(74) Representative: Vossius & Partner Patentanwälte Rechtsanwälte mbB
(86) International application number: PCT/KR2022/013749
(87) International publication number: WO 2023/210881

(57) **Abstract**

The present disclosure relates to an SDN-based in-vehicle network in which delay and transmission uncertainty can be resolved even if a controller area network (CAN) signal is converted into an Ethernet signal and transmitted within a vehicle network, and a control method thereof, and may provide a method for controlling an in-vehicle network, etc., the method comprising the steps of: on the basis of a priority of an Ethernet signal which is converted from a CAN signal so as to be transmitted from a first node to a second node, determining whether a bandwidth necessary for transmission of the Ethernet signal can be secured in a transmission path between the first node and the second node; if the bandwidth can be secured, controlling the Ethernet signal to be transmitted to the second node according to the transmission path; and if the bandwidth cannot be secured, changing the transmission path to pass through a third node, and controlling the Ethernet signal to be transmitted to the second node according to the changed transmission path.

## Description

### TECHNICAL FIELD

The present disclosure relates to a software-defined networking based (SDN-based) in-vehicle network for transmitting heterogeneous protocol messages within a vehicle and control method therefor.

### BACKGROUND

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

The convenience function of the vehicle has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, Ethernet network systems are being applied to vehicles with the evolution of the vehicle electrical/electronic (E/E) architecture. However, since legacy network systems such as a controller area network (CAN) system are still widely used in vehicles, it is necessary for the Ethernet network system to coexist with the legacy network system. In other words, there may be a need for conversion between CAN signals and Ethernet signals within vehicles.

In the CAN system, low latency communication is possible due to the static network configuration and the characteristics of CAN communication. However, when CAN signals are converted to Ethernet signals for transmission, high latency and transmission uncertainty may arise due to the characteristics of Ethernet communication, potentially causing safety issues in vehicle operation.

### DISCLOSURE

### TECHNICAL PROBLEM

The present disclosure is proposed to address the aforementioned issues and various related problems. The present disclosure aims to provide a software-defined networking based (SDN-based) in-vehicle network and control method therefor to eliminate latency and transmission uncertainty when controller area network (CAN) signals are converted to Ethernet signals and transmitted within a vehicle network.

### TECHNICAL SOLUTION

In an aspect of the present disclosure, provided herein is a method of controlling an in-vehicle network. The control method includes: determining whether a bandwidth required for transmission of an Ethernet signal is capable of being secured on a transmission path between a first node and a second node based on a priority of the Ethernet signal, wherein the Ethernet signal is converted from a controller area network (CAN) signal and is to be transmitted from the first node to the second node; based on that the bandwidth is capable of being secured, controlling the Ethernet signal to be transmitted to the second node along the transmission path; and based on that the bandwidth is incapable of being secured, changing the transmission path to route through a third node and controlling the Ethernet signal to be transmitted to the second node along the changed transmission path.

The CAN signal may be transmitted based on software-defined networking (SDN) between the first node, the second node, and the third node. In other words, the network may be controlled for the transmission of the CAN signal.

The control method may further include transmitting, by the first node, a control request message to secure the transmission path for the Ethernet signal.

Based on a type of the CAN signal, a data size of the CAN signal, a priority of the CAN signal, an identifier of the first node, and an identifier of the second node included in the control request message, it may be determined whether the bandwidth required for the transmission of the Ethernet signal is capable of being secured.

The control request message may be transmitted based on that the CAN signal is not intended for Scalable Service-Oriented Middleware over IP (SOME/IP) service communication.

The control method may further include: based on that the CAN signal is intended for the service communication, transmitting, by the first node, a discovery message for service offering; and transmitting, by the second node, a discovery message for service finding. Based on the discovery message for service offering and the discovery message for service finding, it may be determined whether a bandwidth required for the service communication is capable of being secured.

The discovery message for service offering may include identification information on the service communication, a priority of the service communication, a data size of the service communication, and an identifier of the first node, and the discovery message for service finding may include identification information on the service communication and an identifier of the second node.

The control method may further include: based on that the bandwidth is capable of being secured, transmitting a first parameter for securing the bandwidth to a first SDN switch of the first node; securing, by the first SDN switch, a queue responsible for the bandwidth among a plurality of queues managed by the first SDN switch based on the first parameter; and transmitting the Ethernet signal through the secured queue.

The first parameter may be transmitted through a network configuration NETCONF protocol.

The first node, the second node, and the third node may include: a first SDN switch with a first forwarding table, a second SDN switch with a second forwarding table, and a third SDN switch with a third forwarding table, respectively. The method may include: based on that the bandwidth is incapable of being secured, transmitting a second parameter for changing the transmission path to the first SDN switch of the first node; and changing the first forwarding table to transmit the Ethernet signal to the third SDN switch based on the second parameter.

The control method may include: transmitting a third parameter for changing the transmission path to the third SDN switch; and changing the third forwarding table to transmit the Ethernet signal to the second SDN switch based on the third parameter.

The second parameter and the third parameter may be transmitted through an OpenFlow protocol.

The first parameter, the second parameter, and the third parameter may be defined based on a time sensitive network (TSN) standard.

The network may include a host computer. The host computer may include an SDN controller configured to control the first SDN switch, the second SDN switch, and the third SDN switch to secure the bandwidth or change the transmission path by transmitting the first parameter, the second parameter, and the third parameter.

The host computer may further include a priority manager configured to: monitor a plurality of discovery messages for service offering and a plurality of discovery messages for service finding multicast over the network; and transmit basic service communication information on a discovery message for service offering having a priority higher than a predetermined level and a discovery message for service finding related thereto to the SDN controller.

The SDN controller may further include: a forwarding table database (DB) storing forwarding tables of switches of individual nodes; and a path calculator configured to calculate the changed transmission path by referencing to the forwarding table DB.

The SDN controller may further include: a path bandwidth DB storing information on available bandwidths of links managed by switches of individual nodes; and a bandwidth calculator configured to calculate a bandwidth of the changed transmission path by referencing the path bandwidth DB.

The SDN controller may further include: a control manager configured to generate the first parameter, the second parameter, and the third parameter based on calculation results of the path calculator and the bandwidth calculator.

The first node may include a first converter configured to perform conversion between the CAN signal and the Ethernet signal.

In another aspect of the present disclosure, provided herein is an in-vehicle network. The network may include: a first node; a second node; a third node; and a host computer. The first node may be configured to convert a CAN signal into an Ethernet signal to transmit to the second node. The host computer may be configured to: determine whether a bandwidth required for transmission of the Ethernet signal is capable of being secured on a transmission path between the first node and the second node based on a priority of the Ethernet signal; based on that the bandwidth is capable of being secured, control the Ethernet signal to be transmitted to the second node along the transmission path; and based on that the bandwidth is incapable of being secured, change the transmission path to route through the third node and control the Ethernet signal to be transmitted to the second node along the changed transmission path.

### ADVANTAGEOUS EFFECTS

A software-defined networking based (SDN-based) in-vehicle network and control method therefor according to the present disclosure have the following effects.

According to at least one aspect of the present disclosure, even when controller area network (CAN) signals are converted to Ethernet signals and transmitted within a vehicle network, latency and transmission uncertainty may be eliminated.

### BRIEF DESCRIPTION OF THE DRAWINGS

FIGS. 1 and 2 illustrate the exterior of a vehicle according to an embodiment of the present disclosure.
FIGS. 3 and 4 illustrate the interior of a vehicle according to an embodiment of the present disclosure.
FIG. 5 is a block diagram referenced to describe a vehicle related to an embodiment of the present disclosure.
FIG. 6 is a block diagram of a hybrid network system for communication among a plurality of nodes in a vehicle according to the present disclosure.
FIG. 7 illustrates the packet structure of a control request message for securing the transmission path for an Ethernet signal according to an embodiment of the disclosure.
FIGS. 8 and 9 illustrate examples in which the transmission path for an Ethernet signal is changed according to the control request message of FIG. 7.
FIGS. 10 and 11 illustrate the packet structure of a Scalable Service-Oriented Middleware over IP (SOME/IP) service discovery message for service offering (OfferService) according to an embodiment of the present disclosure.
FIG. 12 illustrates mapping tables for converting a controller area network (CAN) signal into a service message according to an embodiment of the present disclosure.
FIG. 13 illustrates transmission of a SOME/IP service discovery message in a hybrid network system for communication among a plurality of nodes in a vehicle according to the present disclosure.
FIG. 14 is a flowchart of the service communication of FIG. 13.
FIG. 15 illustrates transmission of a SOME/IP second discovery message in a hybrid network system for communication among a plurality of nodes in a vehicle according to the present disclosure.
FIG. 16 is a flowchart of generating the control request message of FIG. 7 and the discovery message for service offering of FIGS. 10 and 11.
FIG. 17 is a detailed block diagram of a host computer in a vehicle according to an embodiment of the present disclosure.
FIGS. 18 and 19 illustrate transmission of parameters for allocating a bandwidth and changing a forwarding table in a hybrid network system for communication among a plurality of nodes in a vehicle according to the present disclosure.
FIG. 20 is a flowchart illustrating allocating a bandwidth and changing a forwarding table in a hybrid network system for communication among a plurality of nodes in a vehicle according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

Hereinafter, the embodiments of the present disclosure will be described in detail with reference to the accompanying drawings and the content described in the accompanying drawings. However, the present disclosure is not limited or restricted by the embodiments.

The terms used in this specification are selected from widely used general terms in consideration of the functions in the present disclosure. However, the terms may vary according to the intention or practice of those skilled in the art or the emergence of new technologies. In specific cases, terms arbitrarily selected by the applicant are also used, and in such cases, the meaning will be described in the corresponding part of the disclosure. Therefore, it should be noted that the terms used in this specification should be interpreted based on the substantial meanings the terms have and the overall content of this specification, rather than the simple names of the terms.

The vehicle described in the present disclosure may encompass concepts including automobiles and motorcycles. Hereinafter, the description will primarily focus on automobiles.

The vehicle described in the present disclosure may encompass various types of vehicles including an internal combustion engine vehicle with an engine as the power source, a hybrid vehicle with both an engine and an electric motor as the power source, and an electric vehicle with an electric motor as the power source.

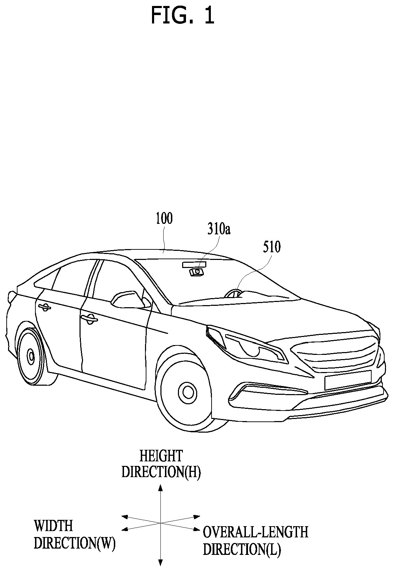

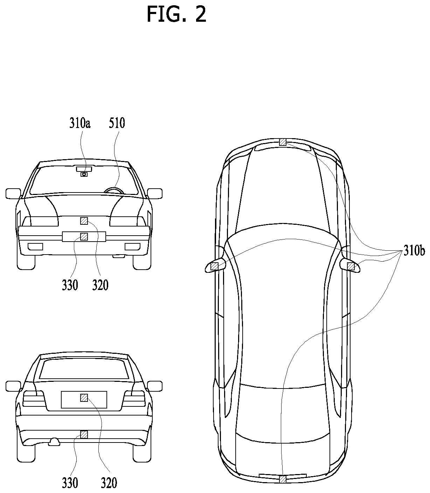

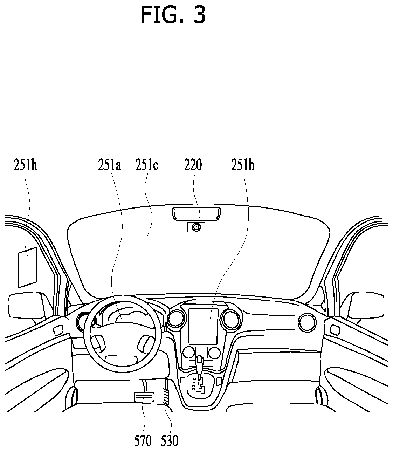

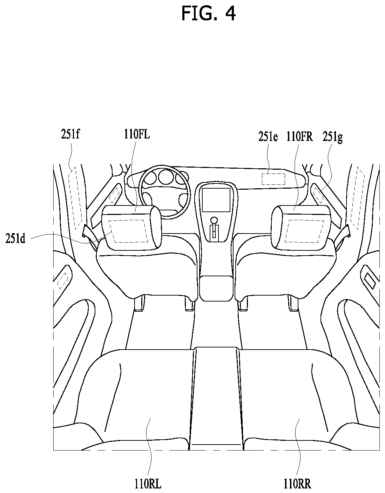

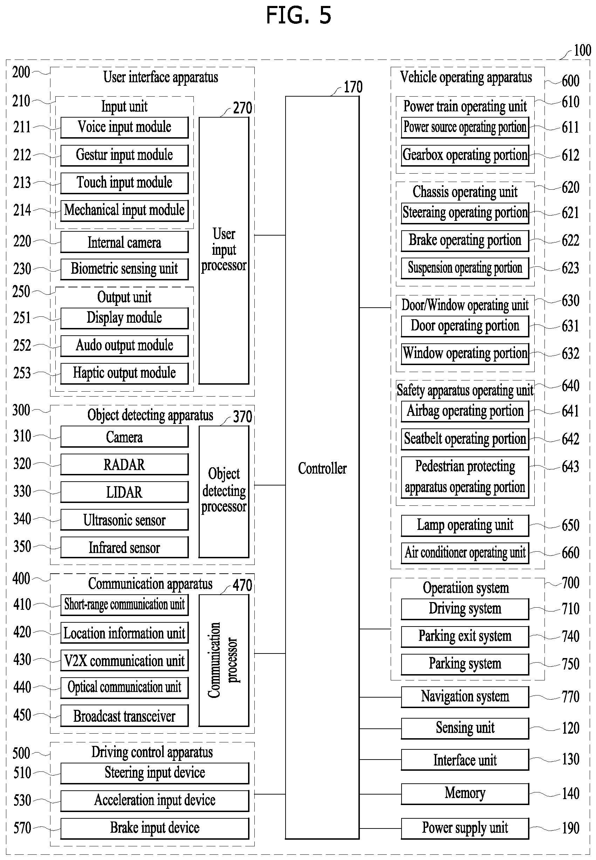

FIGS. 1 and 2 illustrate the exterior of a vehicle according to an implementation and FIGS. 3 and 4 illustrate the interior of the vehicle. FIG. 5 is a block diagram illustrating the vehicle in accordance with the implementation.

As illustrated in FIGS. 1 to 5 , a vehicle 100 may include wheels turning by a driving force, and a steering input device 510 for adjusting a driving (traveling, ongoing, moving) direction of the vehicle 100.

The vehicle 100 may be an autonomous vehicle. The vehicle 100 may be switched into an autonomous mode or a manual mode based on a user input. For example, the vehicle may be switched from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signal generated in a driving system 710, a parking exit system 740, or a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width from the left side to the right side of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface apparatus 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (UIs) or user experiences (UXs) through the user interface apparatus 200.

The user interface apparatus 200 may include an input unit 210, an internal camera 220, a biometric sensing unit 230, an output unit 250 and a user interface processor 270. In some implementations, the user interface apparatus 200 may include more components in addition to components to be explained in this specification or may not include some of those components to be explained in this specification.

The input unit 210 may allow the user to input information. Data collected in the input unit 210 may be analyzed by the user interface processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the user interface processor 270 or the controller 170. The voice input module 211 may include at least one microphone.

The gesture input module 212 may convert a user's gesture input into an electric signal. The converted electric signal may be provided to the user interface processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method, or a disparity method.

The touch input module 213 may convert the user's touch input into an electric signal. The converted electric signal may be provided to the user interface processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the user interface processor 270 or the controller 170. The mechanical input module 214 may be arranged on a steering wheel, a center fascia, a center console, a cockpit module, a door, and the like.

The internal camera 220 may acquire an internal image of the vehicle. The user interface processor 270 may detect a user's state based on the internal image of the vehicle. The user interface processor 270 may acquire information related to the user's gaze from the internal image of the vehicle. The user interface processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible, or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent

OLED, a transparent LCD, a transmissive transparent display, and a transparent LED display. The transparent display may have adjustable transparency.

Meanwhile, the user interface apparatus 200 may include a plurality of display modules 251a to 251g. The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the user interface processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The user interface processor 270 may control an overall operation of each unit of the user interface apparatus 200. In some implementations, the user interface apparatus 200 may include a plurality of processors 270 or may not include any user interface processor 270.

When the user interface processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. An object may include a traffic lane, another vehicle, a pedestrian, a two-wheeled vehicle, traffic signals, light, a road, a structure, a speed hump, a terrain, an animal, and the like.

Objects may be classified into a moving object and a fixed object. For example, the moving object may be a concept including another vehicle and a pedestrian.

The object detecting apparatus 300 may include a camera 310, a radar 320, a LiDAR 330, an ultrasonic sensor 340, an infrared sensor 350, and an object detection processor 370.

In some implementations, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310 a, an around view monitoring (AVM) camera 310 b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk, or a tail gate.

For example, the camera 310 may be disposed adjacent to at least one of side windows within the vehicle to acquire a side image of the vehicle. Or, the camera 310 may be disposed adjacent to a side mirror, a fender, or a door.

The camera 310 may provide an acquired image to the object detection processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift keying (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected obj ect.

The infrared sensor 350 may be disposed on an appropriate position outside the vehicle for detecting an object located at the front, rear or side of the vehicle.

The object detection processor 370 may control an overall operation of each unit of the object detecting apparatus 300.

The object detection processor 370 may detect an object based on an acquired image, and track the object. The object detection processor 370 may execute operations, such as a calculation of a distance from the object, a calculation of a relative speed with the object and the like, through an image processing algorithm.

The object detection processor 370 may detect an object based on a reflected electromagnetic wave which an emitted electromagnetic wave is reflected from the object, and track the object. The object detection processor 370 may execute operations, such as a calculation of a distance from the object, a calculation of a relative speed with the object and the like, based on the electromagnetic wave.

The object detection processor 370 may detect an object based on a reflected laser beam which an emitted laser beam is reflected from the object, and track the object. The object detection processor 370 may execute operations, such as a calculation of a distance from the object, a calculation of a relative speed with the object and the like, based on the laser beam.

The object detection processor 370 may detect an object based on a reflected ultrasonic wave which an emitted ultrasonic wave is reflected from the object, and track the object. The object detection processor 370 may execute operations, such as a calculation of a distance from the object, a calculation of a relative speed with the object and the like, based on the ultrasonic wave.

The object detection processor 370 may detect an object based on reflected infrared light which emitted infrared light is reflected from the object, and track the object. The object detection processor 370 may execute operations, such as a calculation of a distance from the object, a calculation of a relative speed with the object and the like, based on the infrared light.

In some implementations, the object detecting apparatus 300 may include a plurality of object detection processors 370 or may not include any object detection processor 370. For example, each of the camera 310, the radar 320, the LiDAR 330, the ultrasonic sensor 340 and the infrared sensor 350 may each include a corresponding processor in an individual manner.

When the object detection processor 370 is not included in the object detecting apparatus 300, the object detecting apparatus 300 may operate according to the control of a processor of another apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal, or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a communication processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The communication processor 470 may control an overall operation of each unit of the communication apparatus 400.

According to an embodiment, the communication apparatus 400 may include a plurality of communication processors 470 or may not include any communication processor 470.

When the communication processor 470 is not included in the communication apparatus 400, the communication apparatus 400 may operate according to the control of a processor of another apparatus within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 may be configured in the form of a wheel allowing a steering input in a rotating manner. In some implementations, the steering input device may also be configured in a shape of a touch screen, a touch pad, or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad, or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque, and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a vehicle operating processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include an operating processor. Each unit of the operation system 700 may individually include a processor.

In some implementations, the operation system may be implemented by the controller 170 when it is implemented in a software configuration.

In some implementations, the operation system 700 may be implemented by at least one of the user interface apparatus 200, the object detecting apparatus 300, the communication apparatus 400, the vehicle operating apparatus 600 and the controller 170

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a navigation processor. The memory may store the navigation information. The navigation processor may control an operation of the navigation system 770.

According to embodiments, the navigation system 770 may update prestored information by receiving information from an external device through the communication apparatus 400.

In some implementations, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive, and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an electronic control unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

A plurality of ECUs may be installed to control each component in the vehicle 100. Each ECU may perform a function of processing data perceived by sensors and transmitting commands to actuators.

Traditionally, the plurality of ECUs in the vehicle 100 may communicate with each other through legacy network systems such as a controller area network (CAN) system, without any host computer.

Recently, the vehicle 100 has evolved into a connected car capable of communicating in real-time with other vehicles, traffic and communication infrastructure, and pedestrian terminals via wireless local area networks (WLANs) and/or mobile communications (e.g., LTE, 5G, etc.), aiding driver convenience and traffic safety, and providing a variety of Internet services. From the perspective that the connected car itself becomes a communication device, the vehicle 100 may also be understood as a massive Internet of Things (IoT) device.

As the vehicle electrical/electronic (E/E) architecture evolves to further enhance the development of connected cars, an Ethernet network system is being introduced into the vehicle 100. However, considering that legacy network systems such as the CAN system are still widely used in vehicles, there is a need for the Ethernet network system to coexist with the legacy network systems.

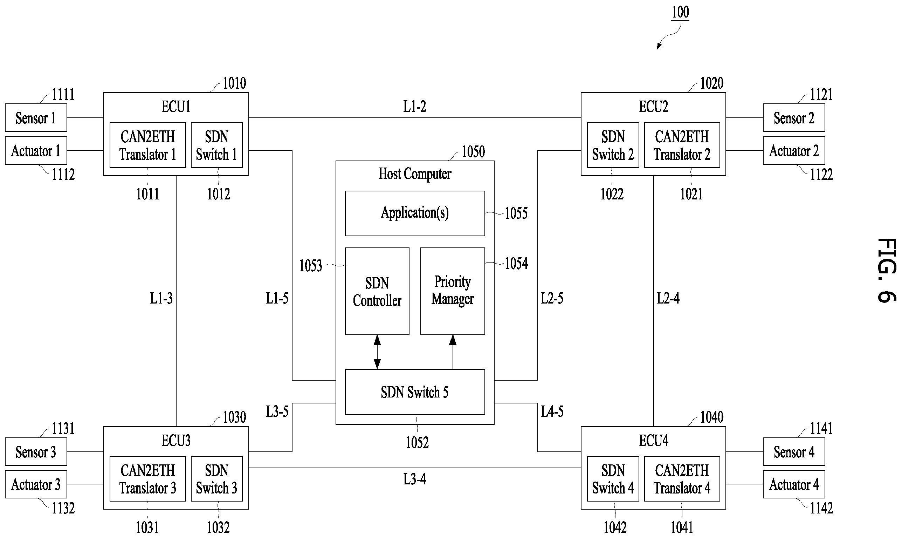

Hereinafter, with reference to FIG. 6, a description will be provided of a hybrid network system where both legacy and next-generation network systems are applicable to the vehicle 100 for communication among a plurality of ECUs. FIG. 6 is a block diagram of a hybrid network system for communication among a plurality of nodes in a vehicle according to the present disclosure.

Hereinafter, it is assumed that the legacy network system is the CAN system and the next-generation network system is the Ethernet network system. However, this is merely an example, and other network systems may be considered as the legacy and next-generation network systems.

The vehicle 100 may include a plurality of ECUs. In FIG. 6, the vehicle 100 is illustrated as including four ECUs: ECU1 1010, ECU2 1020, ECU3 1030, and ECU4 1040. However, this is merely an example, and the vehicle 100 may include more ECUs.

Each ECU 1010, 1020, 1030, or 1040 may include a controller area network to Ethernet (CAN2ETH) converter 1011, 1021, 1031, or 1041 for converting CAN signals into Ethernet signals and a software defined networking (SDN) switch 1012, 1022, 1032, or 1042 for communication based on SDN.

Specifically, ECU1 1010 may include CAN2ETH converter 1 1011 and SDN switch 1 1012, ECU2 1020 may include CAN2ETH converter 2 1021 and SDN switch 2 1022, ECU3 1030 may include CAN2ETH converter 3 1031 and SDN switch 3 1032, and ECU4 1040 may include CAN2ETH converter 4 1041 and SDN switch 4 1042.

Each ECU 1010, 1020, 1030, or 1040 may control at least one sensor 1111, 1121, 1131, or 1141 and/or at least one actuator 1112, 1122, 1132, or 1142 (for example, the above-described driver).

In FIG. 6, it is illustrated that ECU1 1010 controls sensor 1 1111 and actuator 1 1112, ECU2 1020 controls sensor 2 1121 and actuator 2 1122, ECU3 1030 controls sensor 3 1131 and actuator 3 1132, and ECU4 1040 controls sensor 4 1141 and actuator 4 1142. This is merely an example, and each ECU may be configured to control more or fewer sensors and/or actuators.

Additionally, the vehicle may include a host computer 1050 to oversee the electrical/electronic control of the vehicle 100, similar to controlling the plurality of ECUs. The host computer 1050 may be a high-performance computer (HPC) or a general purpose computer. The host computer 1050 may include SDN switch 5 1052, an SDN controller 1053, a priority manager 1054, and an application 1055.

Each ECU 1010, 1020, 1030, or 1040 and the host computer 1050 may be understood as nodes in the network system. Although FIG. 6 illustrates that the network system is configured with five nodes, the network system may certainly be configured with fewer or more nodes.

ECU1 1010 may be connected to ECU2 1020 through an L1-2 link, to ECU3 1030 through an L1-3 link, and to the host computer 1050 through an L1-5 link.

ECU2 1020 may be connected to ECU4 1040 through an L2-4 link and to the host computer 1050 through an L2-5 link.

ECU3 1030 may be connected to ECU4 1040 through an L3-4 link and to the host computer 1050 through an L3-5 link.

ECU4 1040 may be connected to the host computer 1050 through an L4-5 link.

The links in the network system are illustrative. Therefore, the network system may be configured without one of these links, or additional links (e.g., a link connecting ECU1 1010 to ECU4 1040 and/or a link connecting ECU2 1020 to ECU3 1030) may be further defined.

Hereinafter, the configuration of each ECU will be described in detail.

The operation of the CAN2ETH converters 1011, 1021, 1031, and 1041 and the SDN switches 1012, 1022, 1032, and 1042 within the ECUs 1010, 1020, 1030, and 1040 will be described by taking as an example ECU1 1010. The explanation for ECU1 1010 may, of course, be applied to the other ECUs as well.

CAN2ETH converter 1 1011 may receive signals sensed by sensor 1 1111, which is controlled by ECU1 1010, from sensor 1 1111. The signals sensed by sensor 1 1111 are CAN sensing signals based on the CAN system and may be transmitted to ECU1 1010.

CAN2ETH converter 11011 may convert the CAN sensing signals (or messages) into Ethernet sensing signals (or messages).

SDN switch 1 1012 is intended for ECU1 1010 to exchange Ethernet signals with other ECUs or host computers (i.e., other nodes). For example, Ethernet sensing signals may be transmitted to SDN switches of other nodes, and Ethernet signals may be received from other nodes. The destination internet protocol/media access control (IP/MAC) addresses of Ethernet signals may be predefined for SDN switch 1 1012 based on the types (and/or identifiers) of Ethernet signals. SDN switch 1 1012 may store a table that organizes information about transmission paths related to the types of each Ethernet signal (matching between source IP/MAC addresses and destination IP/MAC addresses or between IP/MAC addresses and output ports). Herein, such a table may be referred to as a "forwarding table."

As described above, Ethernet signals between an ECU and another ECU or between an ECU and a host computer may be communicated through an SDN switch. SDN is designed to separate the Ethernet network into a control plane and a data plane, collectively manage the control plane in software, and easily modify at least one of path patterns or bandwidths of an Ethernet signal transmission path in the data plane depending on the communication environment in the vehicle 100. Here, a change in the bandwidth may be understood as securing a bandwidth necessary for communication.

Hereinafter, each component of the host computer 1050 will be described.

SDN switch 5 1052 is intended for the host computer 1050 to communicate Ethernet signals with other ECUs. The transmission paths for Ethernet signals are predefined for SDN switch 5 1052 based on the types of the Ethernet signals. SDN switch 5 1052 may also store a forwarding table including organized transmission paths related to the types of each Ethernet signal, similarly to SDN switch 1 1012.

The SDN controller 1053 is responsible for the control plane in the vehicle 100. The SDN controller 1053 may change the transmission paths (i.e., at least one of path patterns or bandwidths of the transmission paths) of Ethernet signals in the data plane, depending on the communication environment in the vehicle 100.

The priority manager 1054 monitors signals (or messages) for multicast service communications within the vehicle 100 and forwards signals satisfying a predetermined priority level among the monitored signals to the SDN controller 1053, thereby enabling the SDN controller 1053 to secure or modify the transmission paths for Ethernet signals related to service communications corresponding to the signals satisfying the predetermined priority level.

The application 1055 may be an application for supporting the operations and/or computations of the SDN controller 1053 and the priority manager 1054. The SDN controller 1053 and the priority manager 1054 may use the application 1055 for the operations and/or computations thereof.

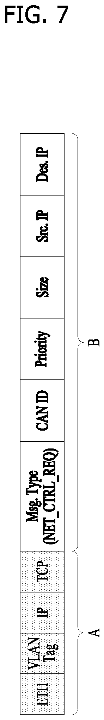

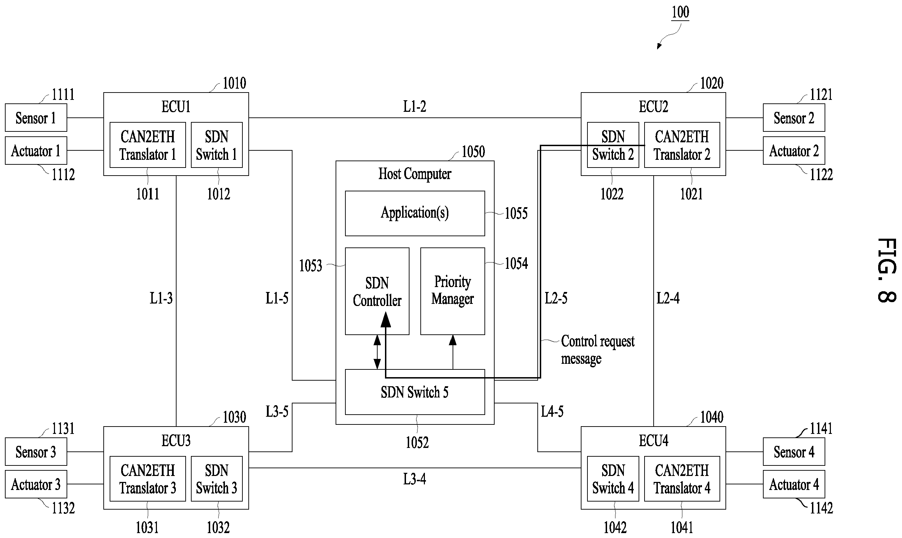

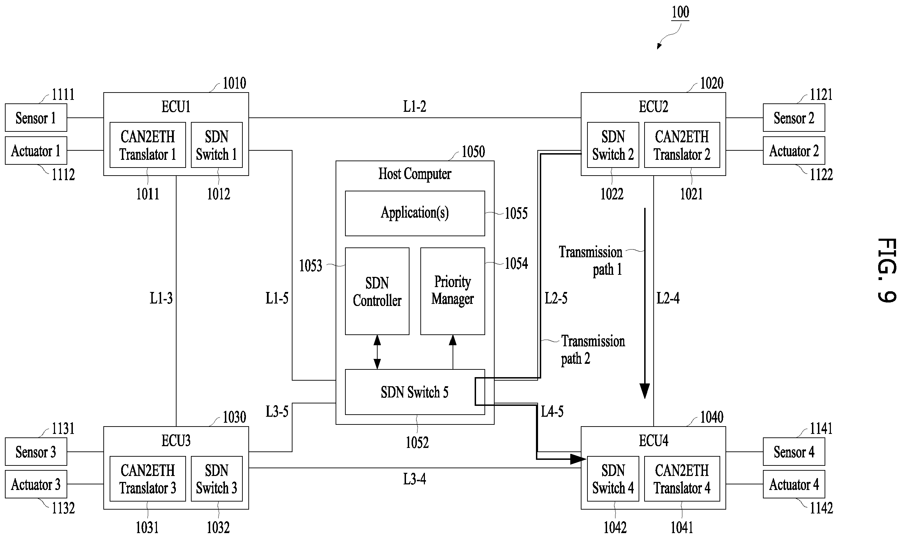

Hereinafter, modification of the transmission paths for Ethernet signals in the network system of FIG. 6 will be described with reference to FIGS. 7 to 9. FIG. 7 illustrates the packet structure of a control request message for securing the transmission path for an Ethernet signal according to an embodiment of the disclosure, and FIGS. 8 and 9 illustrate examples in which the transmission path for an Ethernet signal is changed according to the control request message of FIG. 7.

When ECU2 1020 receives a CAN sensing signal, for example, from sensor 2 1121, the CAN2ETH converter 2 1021 in ECU2 1020 may convert the CAN sensing signal into an Ethernet sensing signal and transmit the Ethernet sensing signal to SDN switch 2 1022 of ECU2 1022. SDN switch 2 1022 may refer to the forwarding table thereof (hereafter referred to as "forwarding table 2") and then transmit the converted Ethernet sensing signal to another node within the network system. It is assumed that the other node receiving the Ethernet sensing signal is ECU4 1040. In addition, it is assumed that the transmission path for the Ethernet sensing signal predefined in forwarding table 2 is the L2-4 link (i.e., the transmission path is the L2-4 link).

However, when ECU2 1020 transmits the Ethernet sensing signal to ECU4 1040 via the L2-4 link, the latency of the Ethernet sensing signal may occur depending on the current data traffic situation on the L2-4 link. In addition, if there is a physical issue with the L2-4 link, ECU4 1040 may not receive the Ethernet sensing signal.

To prevent such situations, before transmitting the Ethernet sensing signal to ECU4 1040, ECU2 1020 may transmit a control request message to the host computer 1050 to secure the transmission path for the Ethernet sensing signal.

As illustrated in FIG. 7, the control request message may be composed of an Ethernet packet part A and a payload packet part B.

The Ethernet packet part A is designed to comply with the standards for transmission control protocol/Internet protocol based (TCP/IP-based) communication between nodes and may include an Ethernet packet header (ETH), a virtual local area network (VLAN) tag header for network virtualization, an IP header, and a TCP header.

The payload packet part B may include a message type (Msg. Type) indicating the type of the CAN sensing signal (or Ethernet sensing signal), the ID of the CAN sensing signal (or the Ethernet signal) (CAN ID), the priority of the CAN sensing signal (or Ethernet sensing signal), the data size of the CAN sensing signal (or Ethernet sensing signal), information on the source IP of the Ethernet sensing signal (Src. IP) (i.e., source identifier), and information on the destination IP of the Ethernet sensing signal (Des. IP) (i.e., destination identifier). In FIG. 7, the message type is exemplified as a network control request (NET_CTRL REQ).

As illustrated in FIG. 8, the control request message may be transmitted to the SDN controller 1053 of the host computer 1050 via the L2-5 link.

The control request message may be generated and transmitted only if the priority of the Ethernet sensing signal is above a predetermined level. Alternatively, the control request message may be generated and transmitted regardless of the priority.

The SDN controller 1053 may recognize the priority of the Ethernet sensing signal that ECU2 1020 intends to transmit, based on the control request message.

If the recognized priority is above the predetermined level, the SDN controller 1053 may determine that the scheduled transmission path for the Ethernet sensing signal is the L2-4 link (transmission path 1) based on information in the control request message as shown in FIG. 9. That is, the SDN controller 1053 may recognize that the path pattern of the scheduled transmission path is configured with the L2-4 link. The SDN controller 1053 may also determine the data size of the Ethernet sensing signal from the control request message.

Then, the SDN controller 1053 may check whether a bandwidth required to transmit the Ethernet sensing signal is available on the L2-4 link. The required bandwidth may vary depending on the data size of the Ethernet sensing signal. For example, the required bandwidth may be proportional to the data size of the Ethernet sensing signal.

The bandwidths required for Ethernet sensing signals of the same data size may be the same regardless of priorities or vary depending on the priorities. If the required bandwidth varies depending on the priorities, the bandwidth may be wider for higher priorities and narrower for lower priorities. Alternatively, if the required bandwidth varies depending on the priorities, the bandwidth may be narrower for higher priorities and wider for lower priorities.

If it is confirmed that the required bandwidth is available, the SDN controller 1053 may maintain the scheduled transmission path (transmission path 1), i.e., the L2-4 link as it is. That is, the pattern of the transmission path configured with the L2-4 link may be maintained. In addition, the SDN controller 1053 may secure the bandwidth required for transmitting the Ethernet sensing signal on the L2-4 link.

Therefore, the Ethernet sensing signal may be transmitted along the scheduled transmission path.

If it is confirmed that the required bandwidth is not available, the SDN controller 1053 may maintain the scheduled transmission path (transmission path 1). The SDN controller 1053 may block other communication traffic having lower priorities than the Ethernet sensing signal to secure the bandwidth required for transmitting the Ethernet sensing signal.

Therefore, the Ethernet sensing signal may be transmitted along the scheduled transmission path.

Both a case where the required bandwidth is initially available and secured and a case where the required bandwidth is not initially available but becomes available by blocking other communication traffic may be understood as cases where the bandwidth is secured.

However, if there is no other communication traffic with lower priorities than the Ethernet sensing signal, the SDN controller 1053 may not secure the bandwidth required for transmitting the Ethernet sensing signal on the scheduled transmission path (transmission path 1).

Alternatively, a physical issue may occur on the scheduled transmission path, which may cause the scheduled transmission path to be blocked and make Ethernet communication on the scheduled transmission path entirely impossible. This case may also be understood as a case where it is not possible to secure the bandwidth required for transmitting the Ethernet sensing signal.

As shown in FIG. 9, in this case, the SDN controller 1053 may change the scheduled transmission path (i.e., the path pattern of the transmission path) (transmission path 1) to an alternative transmission path (transmission path 2) capable of securing the bandwidth for transmitting the Ethernet sensing signal. In FIG. 9, the alternative transmission path (transmission path 2) (i.e., the path pattern) is illustrated as being configured with the L2-5 link and L4-5 link. This is merely an example of the alternative transmission path and may be configured differently. For example, the alternative transmission path may be configured with the L1-2 link, L1-3 link, and L3-4 link.

When the path pattern of the transmission path is changed from transmission path 1 to transmission path 2, the SDN controller 1053 may control SDN switch 2 1022 and SDN switch 5 1052 to modify forwarding table 2 of SDN switch 2 1022 and forwarding table 5 of SDN switch 5 1052, which are related to the transmission of the Ethernet sensing signal along transmission path 2.

In other words, forwarding table 2 may be modified such that when SDN switch 2 1022 receives the Ethernet sensing signal from CAN2ETH converter 2 1021, the Ethernet sensing signal is forwarded to SDN switch 5 1052.

Forwarding table 5 may be modified such that when SDN switch 5 1052 receives the Ethernet sensing signal from SDN switch 2 1022, the Ethernet sensing signal is forwarded to SDN switch 4 1042.

Therefore, the Ethernet sensing signal may be transmitted on the alternative transmission path.

In the above, securing the transmission path for the Ethernet signal based on the transmission of the control request message has been explained. Hereinafter, securing the transmission path for a service message in a Scalable Service-Oriented Middleware over IP (SOME/IP) service communication environment without transmitting a separate message such as the control request message will be described.

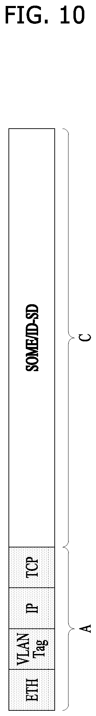

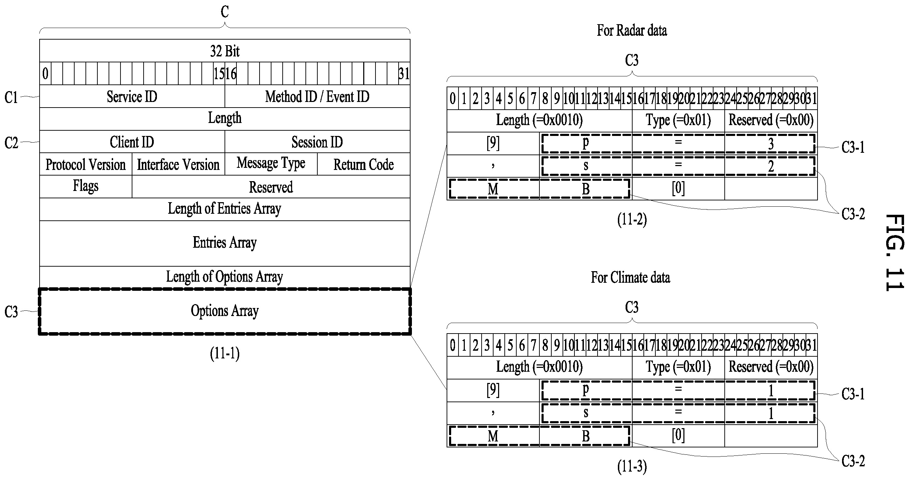

First, the packet structure of a SOME/IP service discovery message for service offering (OfferService) will be described with reference to FIGS. 10 and 11. FIGS. 10 and 11 illustrate the packet structure of an SOME/IP service discovery message for service offering (OfferService) according to an embodiment of the present disclosure.

As shown in FIG. 10, the service discovery message for service offering may be composed of an Ethernet packet part A and a data packet part C for service discovery according to the SOME/IP specification (hereinafter referred to as "SOME/IP SD part for service offering").

The Ethernet packet part A is the same as described above.

The SOME/IP SD part C for service offering will be further explained with reference to FIG. 11.

As shown in (11-1) of FIG. 11, the SOME/IP SD part C for service offering may include information on a service identifier (ID) C1 based on the SOME/IP specification (Service ID) (C 1), a client ID C2, i.e., the ID of a node sending the service discovery message, and an option array C3.

The option array C3 is a data field specified by the SOME/IP specification that allows users to customize the use and configuration depending on their needs. The option array C3 may include additional information necessary to secure the transmission path for a service signal. The additional information may include information on the priority of a service to be provided through the service discovery message and information on the size of data provided through the service.

Hereinafter, the option array C3 will be further described by taking as an example a case where the service is a radar data service (RadarData) and a climate data (information) service (ClimateData).

As shown in (11-1) of FIG. 11, when the service is the radar data service (RadarData), the priority information C3-1 and data size information C3-2 thereon may be included in the option array C3. In (11-1) of FIG. 11, it is illustrated that the priority of the radar data service (RadarData) is "3" and the data size is "2MB".

Alternatively, as shown in (11-2) of FIG. 11, when the service is the climate data service (ClimateData), the priority information C3-1 and data size information C3-2 thereon may be included in the option array C3 differently from when the service is the radar data service (RadarData). In (11-2) of FIG. 11, it is illustrated that the priority of the climate data service (ClimateData) is "1" and the data size is "1MB". Herein, a higher number indicates a higher priority.

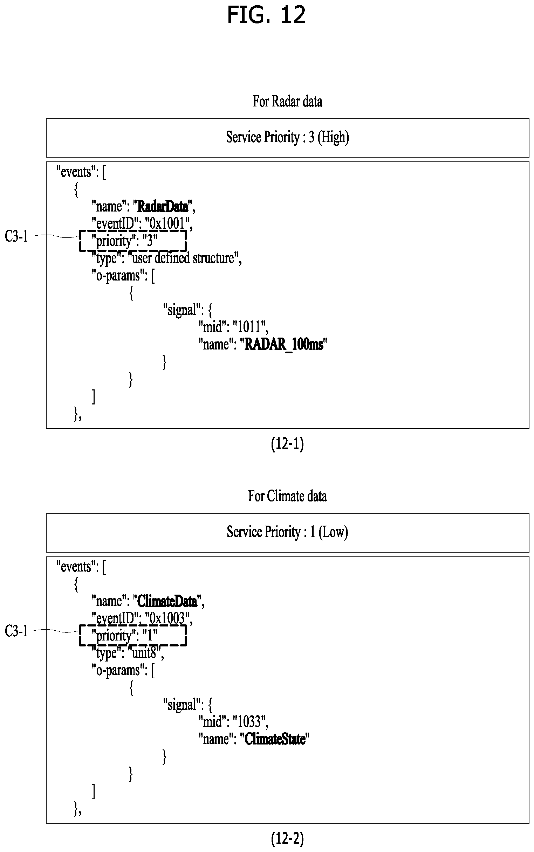

Hereinafter, additionally storing priority information in a service message when a CAN signal is converted into the service message will be described with reference to FIG. 12. FIG. 12 illustrates mapping tables for converting a CAN signal into a service message according to an embodiment of the present disclosure.

Specifically, (12-1) of FIG. 12 illustrates a case where a CAN signal related to the radar data service (RadarData) is converted into a service message.

The CAN signal may not contain the priority information C3-1 on the radar data service included in the option array C3 of the service discovery message. Therefore, when the CAN signal is converted into the service message, it is necessary to add the priority information C3-1 on the radar data service as shown in the conversion mapping table.

In addition, (12-2) of FIG. 12 illustrates a case where a CAN signal related to the climate data service (ClimateData) is converted into a service message.

The CAN signal may not contain the priority information C3-1 on the climate data service included in the option array C3 of the service discovery message. Therefore, when the CAN signal is converted into the service message, it is necessary to add the priority information C3-1 on the climate data service as shown in the conversion mapping table.

The conversion mapping table may be implemented as a JavaScript Object Notation (JSON) file, which may be stored in the CAN2ETH converters 1011, 1021, 1031, and 1041 of the ECUs 1010, 1020, 1030, and 1040. For example, the CAN2ETH converters 1011, 1021, 1031, and 1041 may parse the JSON file. Upon receiving a CAN signal corresponding to the JSON file, the CAN2ETH converters 1011, 1021, 1031, and 1041 may convert the CAN signal into a service message based on the JSON file. In this case, the priority information may be added to the converted service message.

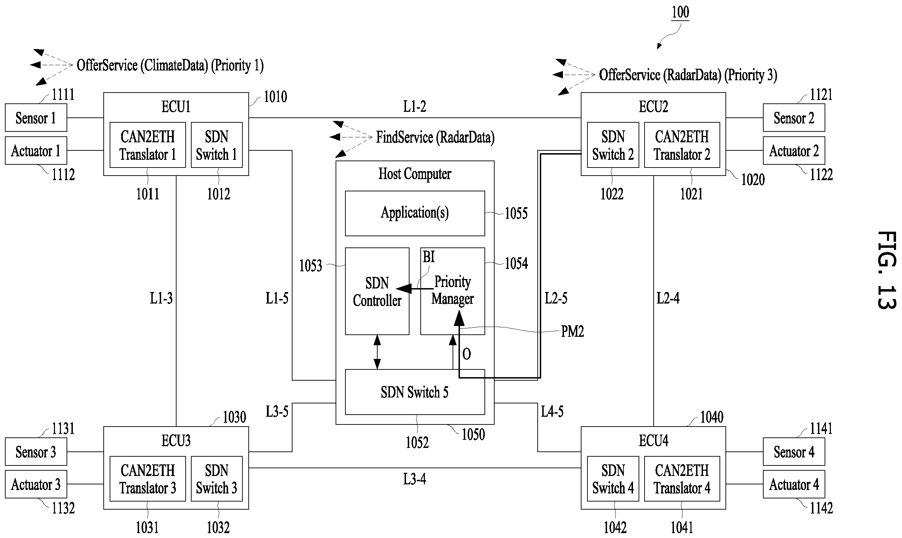

The converted service message may be multicast for discovery of the corresponding service. This will be further explained with reference to FIG. 13. FIG. 13 illustrates transmission of a SOME/IP service discovery message in a hybrid network system for communication among a plurality of nodes in a vehicle according to the present disclosure.

In FIG. 13, it is assumed that ECU1 1010 is multicasting a service discovery message for offering the climate data service (hereinafter referred to as a first discovery message for service offering) and ECU2 1020 is multicasting a service discovery message for offering the radar data service (hereinafter referred to as a second discovery message for service offering). In addition, it is assumed that that the host computer 1050 is multicasting a service discovery message for finding the radar data service (hereinafter referred to as a second discovery message for service finding).

SDN switch 5 1052 of the host computer 1050 may receive all second discovery messages multicast in the network system and forward the second discovery messages to the priority manager 1054.

That is, as shown in FIG. 13, SDN switch 5 1052 may forward the multicast second discovery message for service offering PM2 to the priority manager 1054. Although not shown in FIG. 13, SDN switch 5 1052 may also receive the multicast second discovery message for service finding and first discovery message for service offering and forward the second discovery message for service finding and first discovery message for service offering to the priority manager 1054.

The priority manager 1054 may first examine priority information in the second discovery message for service offering and determine that the priority of the second discovery message for service offering PM2 is above a predetermined threshold. In this case, the priority manager 1054 may store the second discovery message for service offering PM2 that has a priority above the predetermined threshold. The priority manager 1054 may obtain second service identification information, the ID of a node that transmits the message (i.e., the ID of a second service provider, which is the ID of ECU2 1020 in this example), and information on the data size of the second service from the second discovery message for service offering PM2.

Then, the priority manager 1054 may obtain the second service identification information and the ID of a node that transmits the message (i.e., the ID of a second service consumer, which is the ID of the host computer 1050 in this example) from the second discovery message for service finding.

Based on the fact that the second discovery message for service offering and the second discovery message for service finding share the second service identification information, the priority manager 1054 may determine that the second discovery message for service offering is related to the second discovery message for service finding. Therefore, the priority manager 1054 may extract from the second discovery message for service offering and second discovery message for service finding: i) the second service identification information, ii) second service priority information, iii) the second service provider ID (e.g., information on the IP of the provider), iv) the second service consumer ID (e.g., information on the IP of the consumer), and v) the second service data size (hereinafter referred to as "service communication basic information (BI)") and transmit the above information to the SDN controller 1053.

The SDN controller 1053 may determine that second service communication will be performed between the second service provider (i.e., ECU2) and the second service consumer (i.e., host computer) based on the service communication basic information (BI). In this case, the SDN controller 1053 may identify a scheduled transmission path and data size for the second service communication.

Then, the SDN controller 1053 may check whether a bandwidth required for the second service communication is available on the scheduled transmission path. The required bandwidth may vary depending on the data size of the second service communication. For example, the required bandwidth may be proportional to the data size of the second service communication.

The bandwidths required for service communication of the same data size may be the same regardless of priorities or vary depending on the priorities. If the required bandwidth varies depending on the priorities, the bandwidth may be wider for higher priorities and narrower for lower priorities. Alternatively, if the required bandwidth varies depending on the priorities, the bandwidth may be narrower for higher priorities and wider for lower priorities.

If it is confirmed that the required bandwidth is available, the SDN controller 1053 may maintain the scheduled transmission path for the second service communication as it is.

Therefore, the second service communication may be performed on the scheduled transmission path.

If it is confirmed that the required bandwidth is not available, the SDN controller 1053 may maintain the scheduled transmission path (i.e., path pattern). The SDN controller 1053 may ensure the bandwidth for the second service communication by blocking other communication traffic with lower priorities than the second service communication.

Therefore, the second service communication may be performed on the scheduled transmission path.

However, if there is no other communication traffic with lower priorities than the second service communication, the SDN controller 1053 may not secure the bandwidth required for the second service communication on the scheduled transmission path (transmission path 1). Alternatively, a physical issue may occur on the scheduled transmission path, which may make the second service communication on scheduled transmission path entirely impossible.

In this case, the SDN controller 1053 may change the scheduled transmission path to an alternative transmission path capable of securing the bandwidth for the second service communication. In other words, the path pattern of the scheduled transmission path may be changed.

As described above, if the transmission path is changed, the SDN controller 1053 may modify the forwarding table of an SDN switch related to in the changed transmission path to align with the changed transmission path.

Therefore, the second service communication may be performed on the changed alternative transmission path.

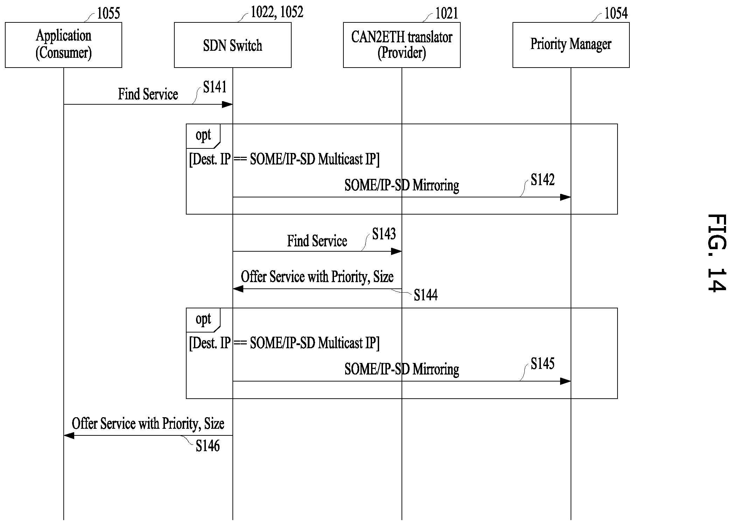

Hereinafter, the second service communication of FIG. 13 will be further explained with reference to FIG. 14. FIG. 14 is a flowchart of the service communication of FIG. 13.

A second service consumer 1055 such as an application of a host computer may transmit a second discovery message for service finding to SDN switches 1022 and 1052 [S141].

The SDN switches 1022 and 1052 may mirror the second discovery message for service finding to a priority manager 1054 [S142] and multicast the second discovery message for service finding for a second service provider 1021 [S143].

The SDN switches 1022 and 1052 may receive a second discovery message for service offering multicast by the second service provider 1021 [S144], mirror the second discovery message for service offering to the priority manager 1054 [S145], and multicast the second discovery message for service offering for the second service consumer 1055 [S146].

As described above with reference to FIG. 13, second service communication may be performed between the second service provider 1021 and the second service consumer 1055 on a transmission path secured by the SDN controller 1053.

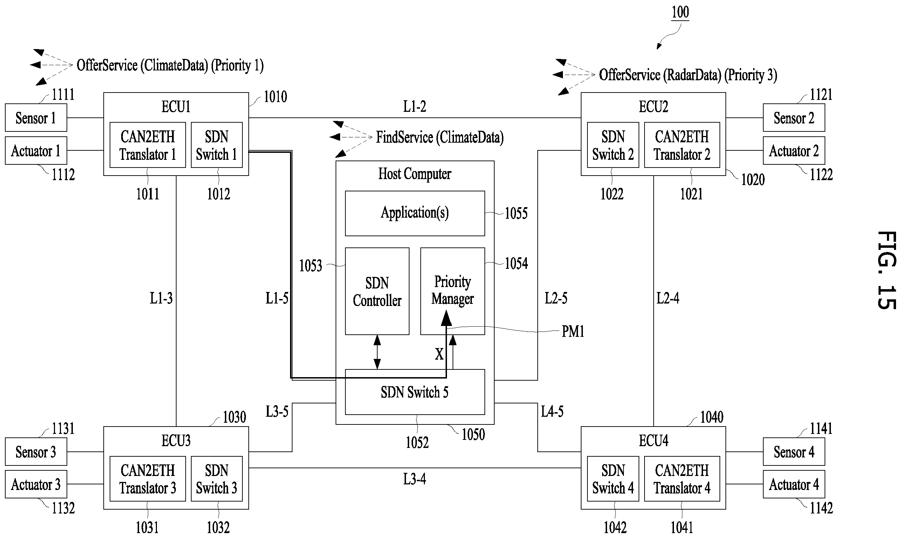

In the above, cases in which service communication has a priority above a predetermined threshold (e.g., radar data service) have been described. Hereinafter, cases in which service communication has a priority lower than the predetermined threshold (e.g., climate data service) will be described with reference to FIG. 15. FIG. 15 illustrates transmission of a SOME/IP second discovery message in a hybrid network system for communication among a plurality of nodes in a vehicle according to the present disclosure.

Similarly to FIG. 13, it is assumed in FIG. 15 that ECU1 1010 is multicasting a second discovery message for offering the climate data service (hereinafter referred to as a first discovery message for service offering) and ECU2 1020 is multicasting a second discovery message for offering the radar data service (hereinafter referred to as a second discovery message for service offering). However, unlike in FIG. 13, it is assumed in FIG. 15 that the host computer 1050 is multicasting a second discovery message for finding the climate data service (hereinafter referred to as a first discovery message for service finding).

SDN switch 5 1052 of the host computer 1050 may receive all second discovery messages multicast in the network system and forward the second discovery messages to the priority manager 1054.

That is, as shown in FIG. 15, SDN switch 5 1052 may forward the multicast first discovery message for service offering PM1 to the priority manager 1054. Although not shown in FIG. 15, SDN switch 5 1052 may also receive the multicast first discovery message for service finding and second discovery message for service offering PM2 and forward the first discovery message for service finding and second discovery message for service offering PM2 to the priority manager 1054.

The priority manager 1054 may examine priority information in the first discovery message for service offering and determine that the priority of the first discovery message for service offering PM1 is below a predetermined threshold. In this case, the priority manager 1054 may discard the first discovery message for service offering PM1 that has a priority lower than the predetermined threshold.

Therefore, even if the priority manager 1054 receives the first discovery message for service finding, the priority manager 1054 may not transmit first service communication basic information to the SDN controller 1053 because the corresponding first discovery message for service offering PM1 is discarded.

Therefore, the SDN controller 1053 does not need to perform a process for securing a transmission path required for first service communication. In other words, the first service communication may be performed on the scheduled transmission path.

The SDN controller 1053 only needs to perform processing for securing transmission paths for service communication with priorities above the predetermined threshold due to the priority manager 1054.

Hereinafter, the necessity of the priority manager 1054 will be explained.

The SDN controller 1053 may secure transmission paths for service communication with priorities above the predetermined threshold by monitoring all service messages multicast from each node. However, if the SDN controller 1053 monitors all service messages multicast from each node, it may impose significant loads on the SDN controller 1053.

To address such an issue, the host computer 1050 may further include the priority manager 1054.

The priority manager 1054 may monitor multicast messages for service communication on behalf of the SDN controller 1053 and forward service communication basic information (BI) related to service communication with priorities above the predetermined threshold to the SDN controller 1053. Therefore, the SDN controller 1053 only needs to secure the transmission paths for the service communication with priorities above the predetermined threshold, thereby reducing the computational load.

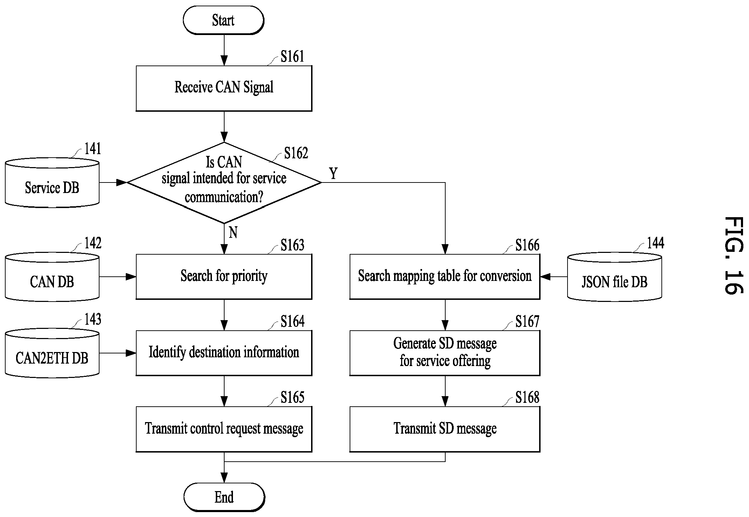

Hereinafter, a process for the CAN2ETH converters 1011, 1021, 1031, and 1041 to generate the control request message of FIG. 7 or the discovery message for service offering of FIG. 10 to securing a transmission path as described above explained will be explained with reference to FIG. 16. FIG. 16 is a flowchart of a process for generating the control request message of FIG. 7 and the discovery message for service offering of FIG. 10.

A CAN2ETH converter may receive a CAN signal intended to be transmitted to other nodes [S161].

The CAN2ETH converter may search for the ID and/or type of the CAN signal in a service data base (DB) 141 and then determine whether the CAN signal is intended for service communication [S162]. The service DB 141 may store information on whether each CAN signal is intended for service communication based on the ID and/or type thereof.

If the CAN signal is not intended for service communication, the CAN2ETH converter may generate a control request message as described in FIG. 7 for the CAN signal and transmit the control request message to the SDN controller 1053.

That is, the CAN2ETH converter may search a CAN DB 142 for the ID and/or type of the CAN signal and then determine the priority of the CAN signal [S163]. The CAN DB 142 may store information on the priority of each CAN signal based on the ID and/or type of each CAN signal.

Then, the CAN2ETH converter may search a CAN2ETH DB 143 for the ID and/or type of the CAN signal and then determine information on the destination of the CAN signal [S164].

Then, the CAN2ETH converter may generate the control request message based on the information on the priority and destination of the CAN signal and transmit the control request message to the SDN controller 1053 [S165]. In generating the control request message, the CAN2ETH converter may determine other information necessary for generating the control request message, i.e., information on the type, ID, source, and data size of the CAN signal, directly from the CAN signal.

On the other hand, if it is determined in step S 162 that the CAN signal is intended for service communication, the CAN2ETH converter may search for and parse a conversion mapping table related to the CAN signal by looking up the ID and/or type of the CAN signal in a conversion mapping table DB 144 [S166].

Then, the CAN2ETH converter may generate a discovery message for service offering for the CAN signal based on the parsed conversion mapping table as described in FIGS. 10 and 11 [S167].

Thereafter, the CAN2ETH converter may multicast the discovery message for service offering [S168].

In the above, securing the bandwidth of a scheduled transmission path or changing the path pattern of the scheduled transmission path (i.e., changing the pattern of the scheduled transmission path to a new pattern) has been described. Hereinafter, securing the bandwidth of a transmission path and changing the path pattern thereof will be further explained.

As described above, when the SDN switch 1012, 1022, 1032, 1042, or 1052 receives packet data, the SDN switch 1012, 1022, 1032, 1042, or 1052 may search for the type and/or ID of the packet data in the forwarding table thereof, identify the destination of the packet data, and transmit the received packet data to the identified destination. In other words, when the SDN switch receives packet data, the SDN switch may transmit the received packet data as defined in the forwarding table thereof.

However, when the SDN switch 1012, 1022, 1032, 1042, or 1052 receives packet data that is not defined in the forwarding table thereof, the SDN switch 1012, 1022, 1032, 1042, or 1052 may query the received packet data to the SDN controller 1053 through a separate SDN protocol.

The SDN controller 1053 may have the forwarding table of each SDN switch 1012, 1022, 1032, 1042, or 1052. Upon receiving the query, the SDN controller 1053 may update the transmission path for the queried packet data in the forwarding table. Then, the SDN controller 1053 may forward the updated forwarding table to the SDN switch that queried the packet data. Alternatively, the SDN controller 1053 may update the forwarding table of the SDN switch according to the updated forwarding table of the SDN controller 1053.

Additionally, the SDN controller 1053 may have information about the available bandwidth of each SDN switch 1012, 1022, 1032, 1042, or 1052. The SND controller 1053 may use the information to secure the bandwidth of the scheduled transmission path or to change the scheduled transmission path to an alternative path as described above.

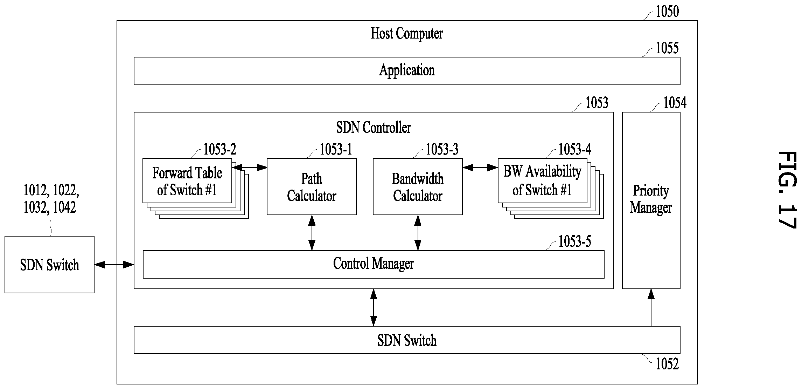

Hereinafter, securing the bandwidth of a transmission path and changing the pattern of the transmission path will be further explained with further reference to FIG. 17. FIG. 17 is a detailed block diagram of a host computer in a vehicle according to an embodiment of the present disclosure.

As shown in FIG. 17, the host computer 1050 may include SDN switch 5 1052, the SDN controller 1053, the priority manager 1054, and the application 1055.

SDN switch 5 1052, the priority manager 1054, and the application 1055 are as previously described. Hereinafter, the SDN controller 1053 will be described in more detail.

The SDN controller 1053 may include a path calculator 1053-1, a bandwidth calculator 1053-3, and a control manager 1053-5. The path calculator 1053-1 may compute a transmission path by referencing a forwarding table DB 1053-2, which stores the forwarding tables of switches of each node. The bandwidth calculator 1053-3 may compute the available bandwidth of the transmission path by referencing a path bandwidth DB 1053-4, which stores information on the available bandwidths of links managed by the switches of each node.

The control manager 1053-5 may control the path calculator 1053-1 and the bandwidth calculator 1053-3 and transmit the computation results of the path calculator 1053-1 and bandwidth calculator 1053-3 to the SDN switches of each node.

A time sensitive network (TSN) standard are designed to transmit data in real-time within a specified time duration, regardless of latency in Ethernet communication. The TSN standard defines parameters for changing forwarding tables and allocating (or securing) bandwidths.

That is, according to the TSN standard, when at least one parameter for changing forwarding tables and allocating bandwidths is configured, the ports of each node may be configured based on the configured parameter.

The control manager 1053-5 generates at least one parameter for changing forwarding tables and allocating bandwidths through the path calculator 1053-1 and the bandwidth calculator 1053-3 and then transmits the at least one parameter to the SDN switch. The corresponding SDN switch 1012, 1022, 1032, 1042, or 1052 may update the forwarding table thereof and/or allocate the bandwidth based on the at least one parameter.

The transmission of parameters for bandwidth allocation and the transmission of parameters for changing forwarding tables may be performed through a separate protocol.

That is, the parameters for bandwidth allocation may be written in the Yet Another Next Generation (YANG) modeling language (e.g., the 802.1q-YANG modeling language) and transmitted through the Network Configuration (NETCONF) protocol.

The corresponding SDN switch receiving the parameters for bandwidth allocation may secure a queue responsible for the bandwidth from among a plurality of queues managed by the SDN switch.

The parameters for changing forwarding tables may be transmitted through the OpenFlow protocol.

When transmitting an Ethernet signal, the CAN2ETH converter 1011, 1021, 1031, or 1041 may include a priority, which was used to secure the transmission path as in the aforementioned control request message, in a VLAN tag header. Then, the SDN switch 1012, 1022, 1032, 1042, or 1052 may receive the Ethernet signal. Based on the priority in the VLAN tag header, the SDN switch 1012, 1022, 1032, 1042, or 1052 may assign the Ethernet signal to the queue responsible for the bandwidth that is pre-secured according to the transmission path for the Ethernet signal. As a result, the Ethernet signal may be transmitted based on the secured bandwidth.

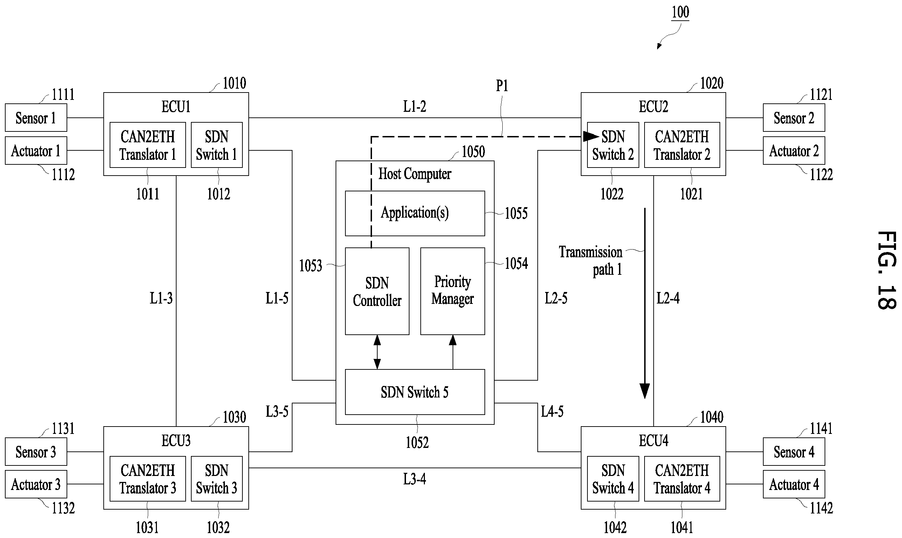

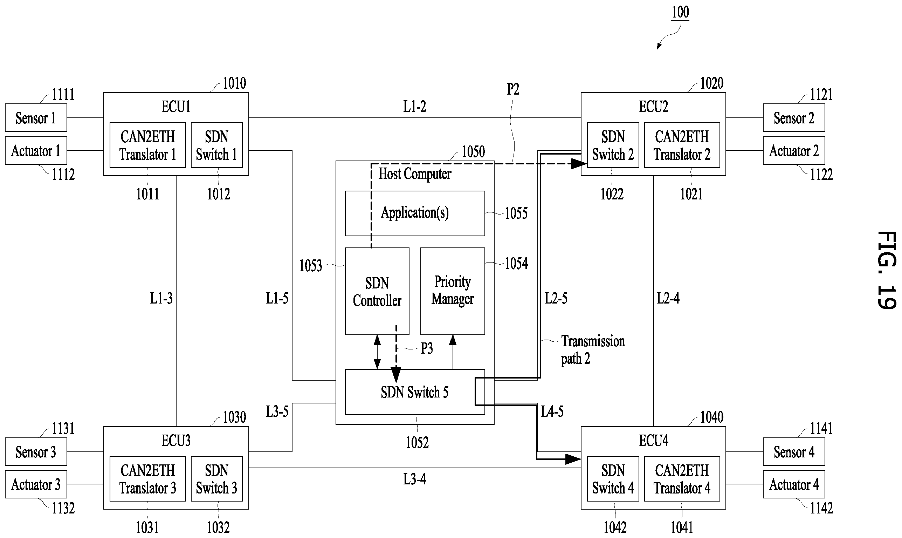

In the following, examples of transmitting parameters for bandwidth allocation and parameters for changing forwarding tables to secure a transmission path will be further explained with reference to FIGS. 18 and 19. FIGS. 18 and 19 illustrate transmission of parameters for allocating a bandwidth and changing a forwarding table in a hybrid network system for communication among a plurality of nodes in a vehicle according to the present disclosure.

In FIG. 18, it is assumed that CAN2ETH converter 2 1021 of ECU2 1020 is attempting to transmit an Ethernet signal to CAN2ETH converter 4 1041 of ECU4 1040, and the scheduled transmission path for the Ethernet signal is the L2-4 link (transmission path 1). In other words, it is assumed that that the pattern of the scheduled transmission path is configured with the L2-4 link.

The SDN controller 1053 may transmit a control signal containing a first parameter P1 for allocating a bandwidth for the Ethernet signal to SDN switch 2 1022 of ECU2 1020.

Then, SDN switch 2 1022 of ECU2 1020 may secure the bandwidth for the Ethernet signal according to the first parameter P1, and CAN2ETH converter 2 1021 may transmit the Ethernet signal to CAN2ETH converter 4 1041 through the L2-4 link on the secured bandwidth.

However, in the case of L2-4 link, the bandwidth of the Ethernet signal may not be sufficient, or the path may be blocked due to communication failures.

In this case, as illustrated in FIG. 19, the SDN controller 1053 may transmit a control signal containing a second parameter P2 and a third parameter P3 to SDN switch 2 1022 of ECU2 1020 and SDN switch 5 1052 of the host computer 1050, respectively. The control signal includes the second parameter P2 and the third parameter P3 for changing a scheduled transmission path (transmission path 1) to an alternative transmission path (transmission path 2) capable of securing a sufficient bandwidth for transmitting an Ethernet signal. FIG. 19 shows an example in which the alternate transmission path (transmission path 2) is configured with the L2-5 link and S4-5 link. That is, FIG. 19 shows that the pattern of the alternate transmission path is configured with the L2-5 link and S4-5 link. It should be noted that the alternate transmission path is merely an example and may be configured differently.

When the transmission path changes from transmission path 1 to transmission path 2, the SDN controller 1053 may control SDN switch 2 1022 and SDN switch 5 1052 to modify forwarding table 2 of SDN switch 2 1022 and forwarding table 5 of SDN switch 5 1052, which are involved in transmission path 2 for transmitting the Ethernet signal.

That is, according to the second parameter P2, when SDN switch 2 1022 receives the Ethernet signal from CAN2ETH converter 2 1021, forwarding table 2 of SDN switch 2 1022 may be changed such that the Ethernet signal is transmitted to SDN switch 5 1052 via the L2-5 link. In addition, SDN switch 2 1022 may pre-secure a bandwidth for the Ethernet signal on the L2-5 link according to the second parameter P2. That is, the second parameter P2 may be understood to include parameters for allocating the bandwidth and parameters for changing the forwarding table.

According to the third parameter P3, when SDN switch 5 1052 receives the Ethernet signal from SDN switch 2 1022, forwarding table 5 of SDN switch 5 1054 may be changed such that the Ethernet signal is transmitted to SDN switch 4 1042 via the L4-5 link. In addition, SDN switch 5 1052 may pre-secure a bandwidth for the Ethernet signal on the L4-5 link according to the third parameter P3. That is, the third parameter P3 may be understood to include parameters for allocating the bandwidth and parameters for changing the forwarding table.

Therefore, the Ethernet sensing signals may be transmitted via the alternate transmission path (transmission path 2).

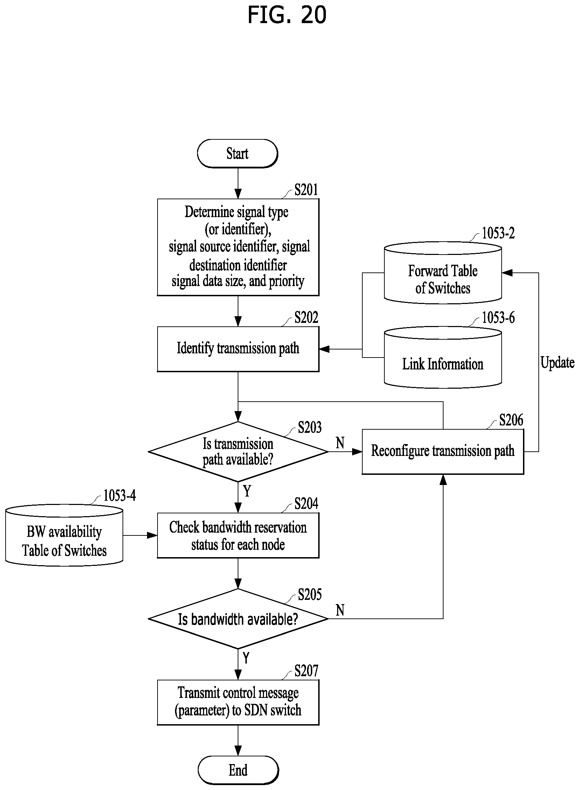

Changing the transmission path and securing the bandwidth described above will be further explained with reference to FIG. 20. FIG. 20 is a flowchart illustrating allocating a bandwidth and changing a forwarding table in a hybrid network system for communication among a plurality of nodes in a vehicle according to an embodiment of the present disclosure.

As described above, the control manager 1053-5 may determine the type (or ID) of an Ethernet signal to be transmitted, a source ID (e.g., source IP), a destination ID (e.g., destination IP), a data size, and a priority [S201].

The control manager 1053-5 may identify the scheduled transmission path for the Ethernet signal by referencing the forwarding table DB 1053-2 and determine whether the scheduled transmission path is blocked (i.e., whether the scheduled transmission path is available) by further referencing a link information DB 1053-6 [S202]. The link information DB 1053-6 may store information about the availability of each link based on a link layer discovery protocol (LLDP).

If the transmission path is unavailable [S203], the control manager 1053-5 may reconfigure the transmission path until an available transmission path is found [S206 and S203]. In addition, the control manager 1053-5 may update the forwarding table DB 1053-2 based on the reconfigured transmission path.

If the transmission path is available [S203], the control manager 1053-5 may assess the bandwidth reservation status for each node on the transmission path by referencing the path bandwidth DB 1053-4 and then determine whether the bandwidth of the transmission path is capable of being secured suitable for the priority of the Ethernet signal [S204].

If the bandwidth of the transmission path is incapable of being secured [S205], the control manager 1053-5 may reconfigure the path pattern of the transmission path until a transmission path capable of securing the bandwidth is found and assess whether a transmission path based on the reconfigured path pattern is available and capable of securing the bandwidth [S206, S203, S204, and S205].

If the available transmission path is capable of securing the bandwidth, the control manager 1053-5 may transmit a control signal including parameters for securing the bandwidth and/or changing the transmission path to the corresponding SDN switch [S207].

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include a controller of an autonomous driving system. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A method of controlling an in-vehicle network, the method comprising:
determining whether a bandwidth required for transmission of an Ethernet signal is capable of being secured on a transmission path between a first node and a second node based on a priority of the Ethernet signal, wherein the Ethernet signal is converted from a controller area network (CAN) signal and is to be transmitted from the first node to the second node;
based on that the bandwidth is capable of being secured, controlling the Ethernet signal to be transmitted to the second node along the transmission path; and
based on that the bandwidth is incapable of being secured, changing the transmission path to route through a third node and controlling the Ethernet signal to be transmitted to the second node along the changed transmission path.

2. The method of claim 1, wherein the CAN signal is transmitted based on software-defined networking (SDN) between the first node, the second node, and the third node.

3. The method of claim 2, further comprising transmitting, by the first node, a control request message to secure the transmission path for the Ethernet signal.

4. The method of claim 3, wherein based on a type of the CAN signal, a data size of the CAN signal, a priority of the CAN signal, an identifier of the first node, and an identifier of the second node included in the control request message, it is determined whether the bandwidth required for the transmission of the Ethernet signal is capable of being secured.

5. The method of claim 3, wherein the control request message is transmitted based on that the CAN signal is not intended for Scalable Service-Oriented Middleware over IP (SOME/IP) service communication.

6. The method of claim 5, further comprising:
based on that the CAN signal is intended for the service communication, transmitting, by the first node, a discovery message for service offering; and
transmitting, by the second node, a discovery message for service finding,
wherein based on the discovery message for service offering and the discovery message for service finding, it is determined whether a bandwidth required for the service communication is capable of being secured.

7. The method of claim 6, wherein the discovery message for service offering includes identification information on the service communication, a priority of the service communication, a data size of the service communication, and an identifier of the first node, and
wherein the discovery message for service finding includes identification information on the service communication and an identifier of the second node.

8. The method of claim 1, comprising:
based on that the bandwidth is capable of being secured, transmitting a first parameter for securing the bandwidth to a first software-defined networking (SDN) switch of the first node;
securing, by the first SDN switch, a queue responsible for the bandwidth among a plurality of queues managed by the first SDN switch based on the first parameter; and
transmitting the Ethernet signal through the secured queue.

9. The method of claim 8, wherein the first parameter is transmitted through a network configuration NETCONF protocol.

10. The method of claim 1, wherein the first node comprises a first software-defined networking (SDN) switch with a first forwarding table;
wherein the second node comprises a second SDN switch with a second forwarding table,
wherein the third node comprises a third SDN switch with a third forwarding table, and
wherein the method further comprises:
based on that the bandwidth is incapable of being secured, transmitting a second parameter for changing the transmission path to the first SDN switch of the first node; and
changing the first forwarding table to transmit the Ethernet signal to the third SDN switch based on the second parameter.

11. The method of claim 10, further comprising:
transmitting a third parameter for changing the transmission path to the third SDN switch; and
changing the third forwarding table to transmit the Ethernet signal to the second SDN switch based on the third parameter.

12. The method of claim 11, wherein the second parameter and the third parameter are transmitted through an OpenFlow protocol.

13. The method of claim 12, wherein the first parameter, the second parameter, and the third parameter are defined based on a time sensitive network (TSN) standard.

14. The method of claim 11, wherein the network comprises a host computer, and
wherein the host computer comprises an SDN controller configured to control the first SDN switch, the second SDN switch, and the third SDN switch to secure the bandwidth or change the transmission path by transmitting the first parameter, the second parameter, and the third parameter.

15. The method of claim 14, wherein the host computer further comprises a priority manager configured to:
monitor a plurality of discovery messages for service offering and a plurality of discovery messages for service finding multicast over the network; and
transmit basic service communication information on a discovery message for service offering having a priority higher than a predetermined level and a discovery message for service finding related thereto to the SDN controller.

16. The method of claim 15, wherein the SDN controller further comprises:
a forwarding table database (DB) storing forwarding tables of switches of individual nodes; and
a path calculator configured to calculate the changed transmission path by referencing to the forwarding table DB.

17. The method of claim 16, wherein the SDN controller further comprises:
a path bandwidth database (DB) storing information on available bandwidths of links managed by switches of individual nodes; and
a bandwidth calculator configured to calculate a bandwidth of the changed transmission path by referencing the path bandwidth DB.

18. The method of claim 17, wherein the SDN controller further comprises:
a control manager configured to generate the first parameter, the second parameter, and the third parameter based on calculation results of the path calculator and the bandwidth calculator.

19. The method of claim 1, wherein the first node comprises a first converter configured to perform conversion between the CAN signal and the Ethernet signal.

20. An in-vehicle network comprising:
a first node;
a second node;
a third node; and
a host computer,
wherein the first node is configured to convert a controller area network (CAN) signal into an Ethernet signal to transmit to the second node,
wherein the host computer is configured to:
determine whether a bandwidth required for transmission of the Ethernet signal is capable of being secured on a transmission path between the first node and the second node based on a priority of the Ethernet signal;
based on that the bandwidth is capable of being secured, control the Ethernet signal to be transmitted to the second node along the transmission path; and
based on that the bandwidth is incapable of being secured, change the transmission path to route through the third node and control the Ethernet signal to be transmitted to the second node along the changed transmission path.
